Europäisches Patentamt

European Patent Office

Office européen des brevets

(19)

(11) Veröffentlichungsnummer: **0 056 170**
**A1**

# (12) EUROPÄISCHE PATENTANMELDUNG

(21) Anmeldenummer: 81200038.8

(22) Anmeldetag: 14.01.81

(51) Int. Cl.³: **B 01 F 15/04,** B 01 J 4/02,
B 44 D 3/06

(43) Veröffentlichungstag der Anmeldung: **21.07.82**
**Patentblatt 82/29**

(84) Benannte Vertragsstaaten: **AT BE CH DE FR GB IT LI NL
SE**

(71) Anmelder: **Akzo N.V., Velperweg 76, NL-6824 BM Arnhem
(NL)**

(72) Erfinder: **Hermann, Peter, Talstrasse 22,
D-7145 Markgröningen 2 (DE)**
Erfinder: **Seitz, Hans-Peter, Pfinztalstrasse 27,
D-7531 Keltern 2 (DE)**

(74) Vertreter: **Sieders, René et al, P.O. Box 314, NL-6800 AH
Arnhem (NL)**

(54) Mischvorrichtung, insbesondere Farbtonmischvorrichtung.

(57) Die Erfindung bezieht sich auf eine Mischvorrichtung, insbesondere eine Farbtonmischvorrichtung, mit mehreren in einem Rahmen vorgesehenen in einer vertikalen Ebene bewegbaren Lagerplätzen (3) zur Aufnahme einer Anzahl unterschiedliche, insbesondere Basisfarbtöne, Sikkative, Härter oder andere Flüssigkeiten enthaltender und je mit einem Auslaufventil versehener Vorratsbehälter (4). Vorzugsweise sind die Lagerplätze als längliche Lageretagen (3) ausgeführt, welche quer zu deren Längsrichtung bezüglich des Rahmens bewegbar angeordnet sind. Die 8 bis 15 Lageretagen, welche je z.B. 10 Vorratsbehälter enthalten, sind mittels am linken und am rechten Ende der Anlage vorgesehener Kettendrehsysteme bewegbar, und zwar derart, daß jede Etage in Abfüllposition gebracht werden kann. Eine Meßvorrichtung, d.h. eine Waage (6) oder eine Volumenmeßvorrichtung, mit einer Aufnahmeplattform (7) für den die Mischung aufnehmenden Behälter (8), ist über die gesamte Länge der in Abfüllposition befindlichen Lageretage verschiebbar im Rahmen angebracht.

Mischvorrichtung, insbesondere Farbtonmischvorrichtung

Die Erfindung bezieht sich auf eine Mischvorrichtung, insbesondere eine Farbtonmischvorrichtung, mit mehreren in einem Rahmen vorgesehenen bewegbaren Lagerplätzen zur Aufnahme einer Anzahl unterschiedliche, insbesondere Basisfarbtöne, Sikkative, Härter oder andere Flüssigkeiten enthaltender und je mit einem Ventil versehener Vorratsbehälter, und mit einer Messvorrichtung und einem Aufnahmeplatz für den die Mischung, insbesondere eine Farbmischung, aufnehmenden Behälter.

Die jährlich steigende Anzahl von neuen Farbtönen, die von der Automobilindustrie eingeführt werden, kann nicht mehr über das herkömmliche Vertriebssystem mit Stützpunktträgern zu den Kunden gebracht werden. Dies benötigt zuviel Zeit, aber vor allem wird eine Bevorratung von ca. 11.000 Autofarbtönen in 3 verschiedenen Lacktypen, d.h. Kunstharz, Acryl und Zweischicht, den Preis pro Liter erheblich verteuern. Dies führte in Lackierbetrieben zu einem sehr hohen Bestand von Restmaterial, das nach einiger Zeit nicht mehr verarbeitungsfähig ist. Während die Problematik bei Autofarbtönen in der Anzahl der Farbtöne liegt, ist es im Malerbereich die Nachfrage nach modischen Farbtönen, die vom Einzelhandel aufgrund der begrenzten Lagermöglichkeiten nur durch Farbton-Mischanlagen erfüllt werden kann. Von der Lackindustrie wurde diesem Trend Rechnung getragen, indem man anstelle von fertig gemischtem Lack sogenannte Mischkonzentrate und Mischlacke entwickelt hat, mit denen Malerlacke, aber auch Dispersionsfarben und Kassiinfarben getönt werden können. Auf dieser Grundlage wurden Farbton-Mischanlagen mit grossem Erfolg in den Markt eingeführt, doch entsprechen diese Anlagen nicht mehr den Anforderungen der Praxis.

Farbtonmischvorrichtungen dieser Art sind bekannt geworden und zum Beispiel in der DE-OS 23 48 791 beschrieben. Diese bekannten Vorrichtungen sind karusselartig ausgeführt und enthalten zwei bezüglich einer zentralen Achse konzentrisch angebrachte Lageretagen mit einem zur Aufnahme der Farbtonbehälter verhältnismässig grossen Durchmesser. Die zwei Lageretagen sind dabei drehbar sowie heb- und senkbar ausgebildet. Ein Nachteil dieser bekannten Vorrichtungen vom Karusseltyp besteht darin, dass die kreiszylinderförmige Gestaltung verhältnismässig viel Raum einnimmt, insbesondere weil die grosse Anzahl Farbtonbehälter am Aussenumfang der zwei Lageretagen aufgestellt werden müssen.

Der vorliegenden Erfindung liegt die Aufgabe zugrunde, eine verbesserte Farbtonmischvorrichtung zu schaffen, mit der es gelingt, insbesondere Karosserielackieranstalten die benötigte Vielzahl von Lackzusammensetzungen in einem engen Raum zur Verfügung zu stellen, ohne dass diese gezwungen sind, eine umfangreiche Lagerhaltung aufrechtzuerhalten.

Diese Aufgabe wird gelöst durch die Schaffung einer Mischvorrichtung, insbesondere Farbtonmischvorrichtung, mit mehreren in einem Rahmen vorgesehenen bewegbaren Lagerplätzen zur Aufnahme einer Anzahl unterschiedliche, insbesondere Basisfarbtöne, Sikkative, Härter oder andere Flüssigkeiten enthaltender und je mit einem Ventil versehener Vorratsbehälter, und mit einer Messvorrichtung und einem Aufnahmeplatz für den die Mischung, insbesondere eine Farbmischung, aufnehmenden Behälter, welche Mischvorrichtung dadurch gekennzeichnet ist, dass die Lagerplätze in einer im wesentlichen vertikalen Ebene bewegbar vorgesehen sind. Erfindungsgemäss sind die Lagerplätze in zwei oder mehreren vertikalen Ebenen bewegbar vorgesehen. Die Messvorrichtung kann als Waage oder als Volumenmessvorrichtung ausgebildet sein.

Eine Farbtonmischvorrichtung vom Typ mit mehreren parallelen als Lageretagen ausgebildeten Lagerplätzen ist erfindungsgemäss dadurch gekennzeichnet, dass die Lageretagen überwiegend länglich ausgeführt und quer zu deren Längsrichtung bezüglich des Rahmens bewegbar angeordnet sind.

Weiterhin wird die Aufgabe in einfacher Weise gelöst durch eine Vorrichtung, die dadurch gekennzeichnet ist, dass am linken und am rechten Ende der länglichen Lageretagen ein Ketten- oder ähnliches Drehsystem zur Durchführung der Lageretagenbewegung quer zur Längsrichtung der Etagen und mit parallel bleibenden Etagen vorgesehen ist, wobei die Lageretagen nacheinander in eine Abfüllposition und

auch in eine Rührposition gebracht werden können und dass die Messvorrichtung, dass heisst die Waage oder die Volumenmessvorrichtung über die gesamte Länge der in Abfüllposition befindlichen Lageretage verschiebbar im Rahmen angebracht ist. Das Bewegungssystem der Lageretagen ist dabei derart ausgeführt, dass die Lageretagen in bezug auf die an der Vorderseite des Rahmens befindliche Abfüllposition aufwärts, vorwärts, abwärts und rückwärts bewegbar sind.

Die Wirtschaftlichkeit wird noch verbessert, wenn die erfindungsgemässe Vorrichtung dadurch gekennzeichnet ist, dass das Bewegungssystem der Lageretagen derart mit mittels Schalter steuerbarem Antrieb ausgeführt ist, dass die Lageretagen mit hoher und mit niedriger Geschwindigkeit bewegt werden können, wobei gegebenenfalls die Etagen bis kurz vor Erreichung der Rührposition mit hoher Geschwindigkeit und mittels einer Zeitschaltung während des Rührvorgangs mit niedriger Geschwindigkeit bewegt werden können. Eine zweckmässige Ausführung der erfindungsgemässen Vorrichtung ist dadurch gekennzeichnet, dass zum Antrieb drei separate Motoren vorgesehen sind, wobei der erste Motor zum Antrieb des Rührwerks, der zweite Motor zum Antrieb der Lagerplätze oder Lageretagen und der dritte Motor zum Antrieb des Messvorrichtungschlittens vorgesehen ist. Die erfindungsgemässe Vorrichtung ist vorzugsweise dadurch gekennzeichnet, dass die Auslaufventile der Farbtonbehälter stufenlos regelbar sind.

Die Bedienung der erfindungsgemässen Vorrichtung kann in einfacher Weise weitgehend automatisiert werden, wenn die Vorrichtung dadurch gekennzeichnet ist, dass die Drehbewegung des Kettensystems für die Lagerplätze und die Lageretagen und die Betätigung der Auslaufventile über eine Uebertragung, zum Beispiel ein Magnetband oder eine Speichertastatur, in Verbindung mit der Messvorrichtung als Signalgeber erfolgt.

Eine besonders vorteilhafte Ausführung der erfindungsgemässen Vorrichtung ist dadurch gekennzeichnet, dass mit dem Oeffnungsmechanismus des Auslaufventils ein Füllstandsanzeiger gekoppelt ist, der, zum Beispiel akustisch, signalisiert, wann der benötigte Anteil des betreffenden Mischlackes nicht mehr ausreicht.

0056170

Die Brauchbarkeit der erfindungsgemässen Vorrichtung kann erheblich gesteigert werden, wenn die Vorrichtung dadurch gekennzeichnet ist, dass in der Anlage ein Microfilm-Lesegerät und ein Lackrüttelgerät integriert sind.

Die erfindungsgemässe Vorrichtung kann für mehrere Zwecke benutzt werden, wenn die Vorrichtung dadurch gekennzeichnet ist, dass ein Teil der Anlage auf Volumenmischsysteme umgerüstet werden kann.

Vorzugsweise ist die erfindungsgemässe Vorrichtung dadurch gekennzeichnet, dass der Rahmen mit einer an mindestens drei, vorzugsweise fünf, der sechs Seiten geschlossenen Umhüllung versehen ist. Letztere nahezu geschlossene Bauweise ist besonders wichtig, da der Standort von Farbtonmischvorrichtungen öfters besonders staub- und schmutzintensiv ist.

Die Lagerplätze oder die Lageretagen sind derart ausgeführt, dass die Vorratsbehälter mit den Deckeln nach unten daran befestigt und gegebenenfalls mit einem Klemmverschluss gesichert werden können. Für die Behälter können die Originaldosen benutzt werden. Gegebenenfalls können jedoch für die Vorratsbehälter auch Spezialdosen verwendet werden. Im Rührdeckel, der auf den Behälter gesetzt wird, befindet sich ein Rührspachtel. Dies ermöglicht, dass wahlweise nur die benötigten Mischlacke gerührt werden und somit ein Eindicken besonders bei transparenten Basistönen vermieden werden kann.
Dies führt bei den vorbekannten Anlagen zu Farbtonungenauigkeiten und Materialverlust, da alle Mischlacke mitgerührt werden. Das stufenlose Auslaufventil wird bei einer automatisch ausgeführten Anlage über die Messvorrichtung mittels eines Öffnungsmechanismusses gesteuert. Dies führt bei transparenten Mischlacken zu einer erheblichen Beschleunigung des Abfüllvorganges gegenüber herkömmlichen Anlagen. Bei einer manuellen Bedienung wird das Auslaufventil durch einen Druckbügel geöffnet. Unter der in Abfüllposition gebrachten Etage befindet sich die Messvorrichtung, d.h. die Volumenmessvorrichtung oder die Waage, die unter jedem auf der Etage stehenden Mischlack in Position gebracht werden kann. Somit bleiben beim Abfüllvorgang die Mischlacke in der Anlage.

Die Erfindung wird an Hand der schematischen Zeichnung näher erläutert.

Fig. 1 und 2 zeigen die Aussenseite der Farbtonmischvorrichtung.

Fig. 3 zeigt teilweise das Kettendrehsystem mit Lageretagen.

Fig. 4 zeigt die Farbtonmischvorrichtung mit einem Kettendrehsystem am linken und am rechten Ende.

Fig. 5 zeigt einen Farbtonbehälter in grösserem Massstab.

Fig. 6 zeigt im Schnitt das stufenlose Auslaufventil.

Fig. 7 zeigt das Rührgerät und den Füllstandanzeiger.

Fig. 8 zeigt ein Blockschema.

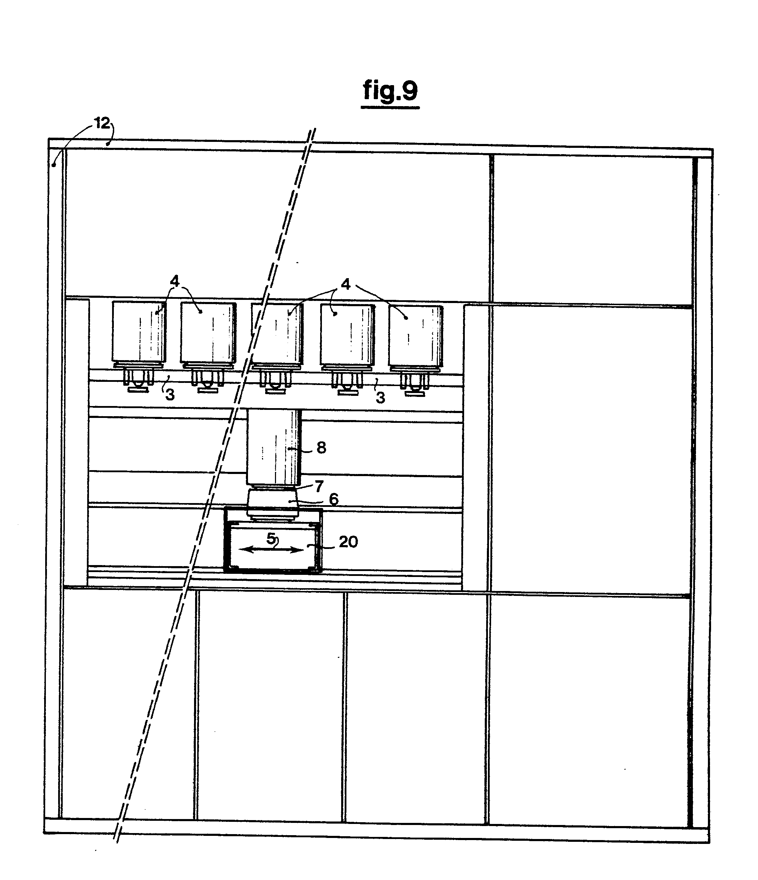

Fig. 9 zeigt die Vorderseite der Anlage.

Fig. 10-13 zeigen noch einige abgeänderte Ausführungsformen der erfindungsgemässen Vorrichtung.

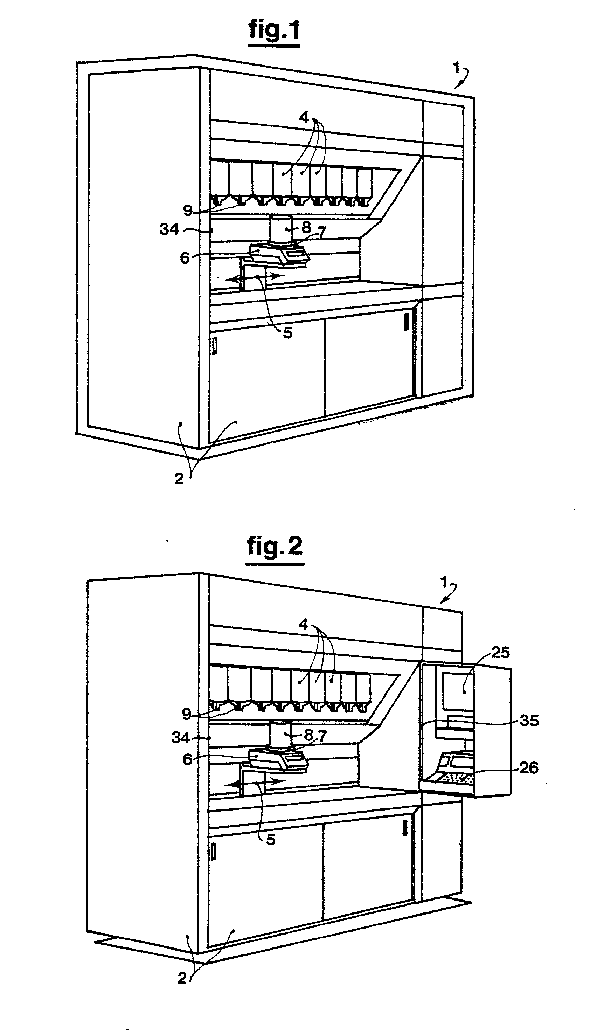

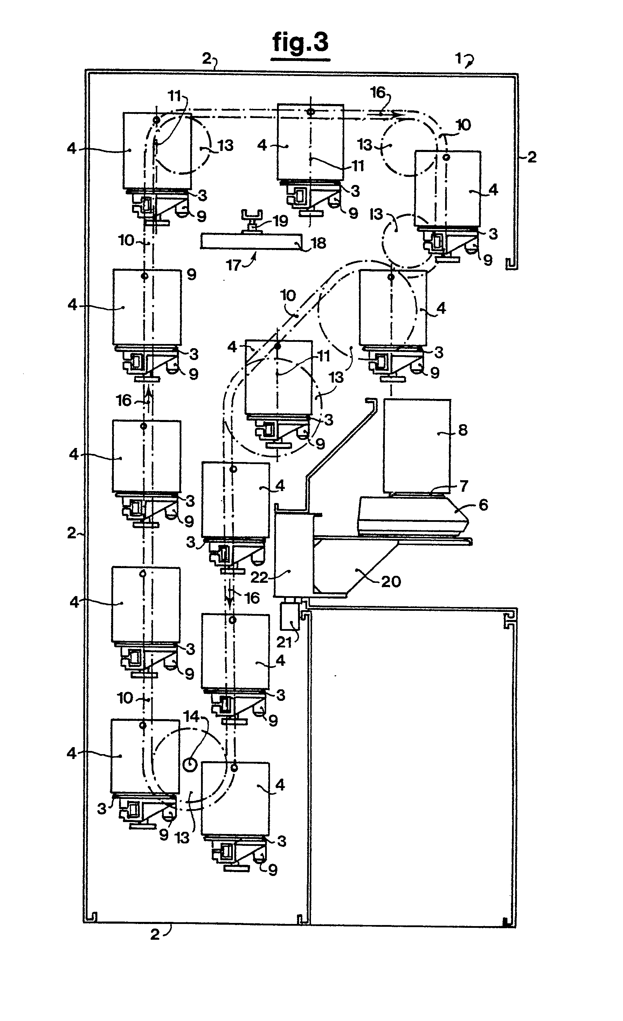

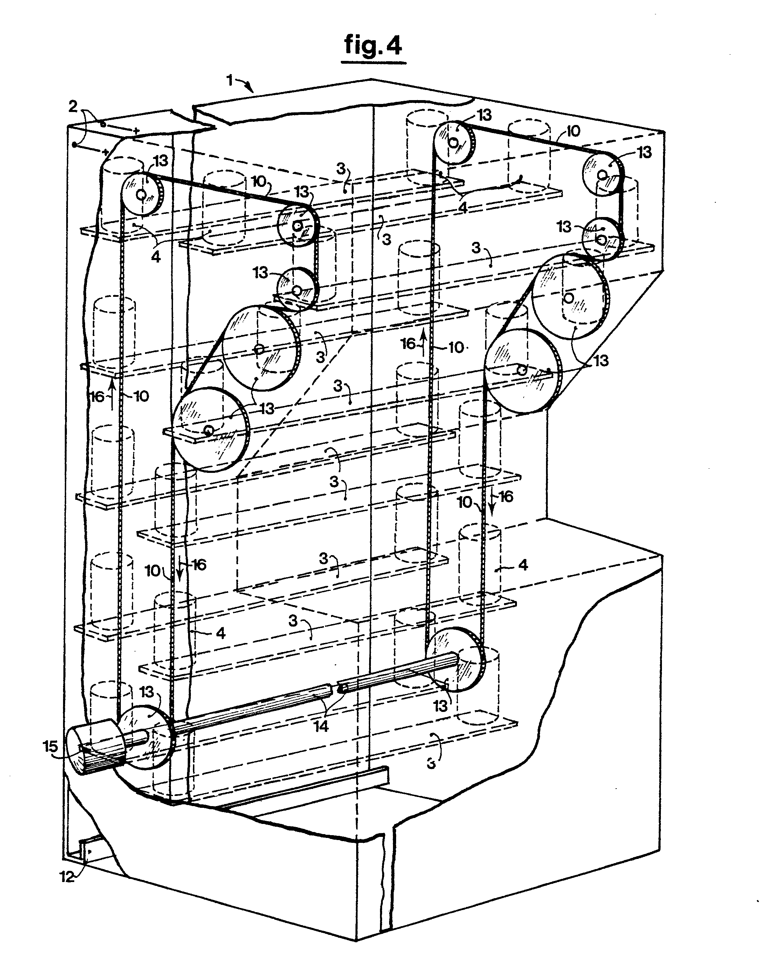

Die Figuren 1 und 2 zeigen perspektivisch die rechtwinklige Bauweise der erfindungsgemässen Farbtonmischvorrichtung 1. Mit Ausnahme der vorderen Bedienungsseite ist der Rahmen der Vorrichtung mit einer geschlossenen Umhüllung 2 versehen. Eine Reihe der an einer der zwölf Lageretagen 3 befestigter Farbtonbehälter 4 ist dabei gerade sichtbar, weil diese Lageretage sich in der Abfüllposition befindet. Die in Pfeilrichtungen 5 hin und her verschiebbare Waage 6 mit einem auf deren Aufnahmeplattform 7 befindlichen Behälter 8 zur Aufnahme der Farbmischung befindet sich dabei gerade unter einem Auslaufventil 9 eines der Behälter 4. Wie aus den Figuren 3 und 4 hervorgeht, enthält die gezeigte Ausführungsform der erfindungsgemässen Farbtonmischvorrichtung zwölf Lageretagen 3. An jeder Etage 3 sind 10 Farbtonbehälter 4 befestigt. Die zwölf Etagen 3 sind derart an den beiden Ketten 10 des Drehsystems am linken und am rechten Ende der Vorrichtung befestigt, dass die Farbtonbehälter während der Bewegung des Kettendrehsystems mit ihren Achsen 11 senkrecht gehalten werden und je in einer im wesentlichen vertikalen Ebene bewogen werden. Die beiden Ketten 10 laufen über im Rahmen 12 drehbar gelagerte Kettenräder 13. Die unteren Kettenräder 13 sind mittels einer Welle 14 gekoppelt und können mit einem Motor 15 zur Bewegung der Lageretagen 3 mittels der beiden Ketten 10 bewegt werden. Bei der gezeichneten Ausführungsform können die länglichen Lageretagen 3 nacheinder auf-

0056170

wärts, vorwärts, abwärts und rückwärts bewegt werden. Die Bewegung der Lageretagen mittels des Kettendrehsystems zur Erreichung der Abfüllposition findet erfindungsgemäss quer zur Längsrichtung der Lageretagen 3 statt. Entlang der Bahn des in Richtung des Pfeiles 16 bewegbaren Kettendrehsystems ist eine Rührstation 17 vorgesehen. Sobald eine bestimmte Lageretage nach vorangehendem Schnellauf die Rührposition 17 erreicht, wird gegebenenfalls mittels eines Schaltsystems das Kettendrehsystem mit niedriger Geschwindigkeit bewegt und wird Rührmotor 18 mittels Uebertragung 19 mit den Rührgeräten 36 in den zehn Behältern 4 gekoppelt. Mittels einer Zeituhrschaltung kann die Rührzeit geregelt werden. Nach Ablauf des Rührvorgangs kann die nächste Lageretage in die Abfüllposition gebracht werden.

Die elektronische Waage 6 ist mittels einer Unterstützung 20 in einer Führung am Rahmen befestigt und kann mittels eines dritten Motors 21 und einer Uebertragung 22 in Richtung der Pfeile 5 hin und her bewegt werden, bis die Waage mit Behälter 8 sich unter dem gewählten Farbtonmischbehälter 4 befindet.

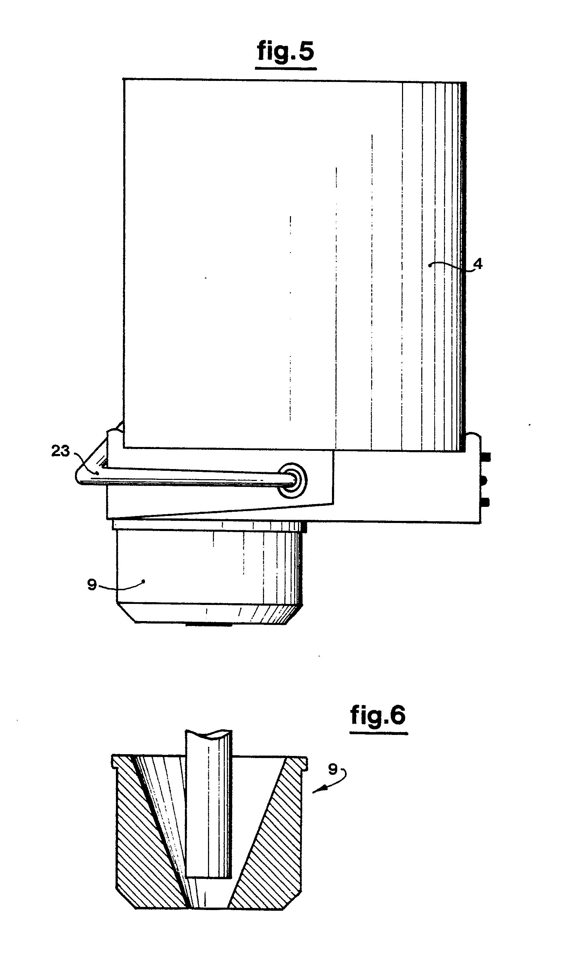

Bei Handbetrieb der erfindungsgemässen Farbtonvorrichtung kann das in Figur 6 gezeigte stufenlose Auslaufventil 9 mit dem Hebel 23 betätigt werden.

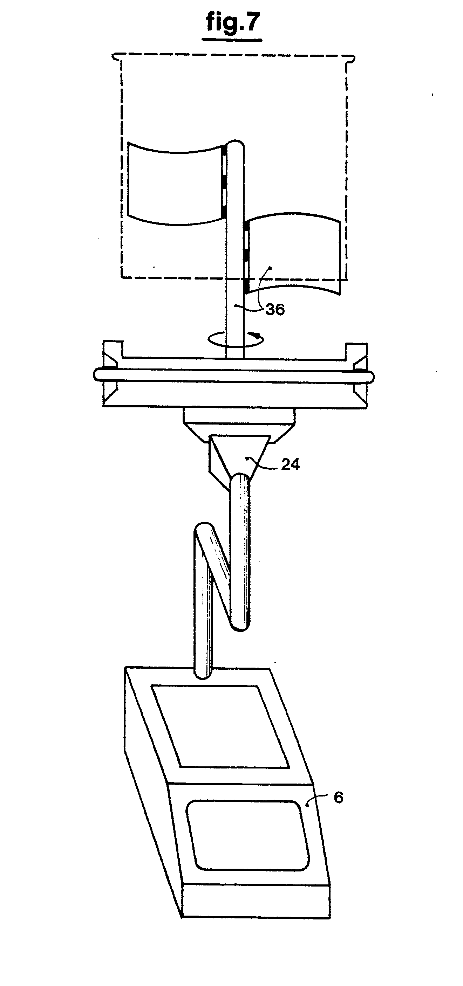

Wie in Figur 7 schematisch dargestellt ist, ist mit dem Oeffnungsmechanismus des Auslaufventils 9 ein Füllstandsanzeiger 24 gekoppelt, der akustisch signalisiert, wann der benötigte Anteil des betreffenden Mischlackes nicht mehr ausreicht.

In der Farbtonmischvorrichtung sind ein Microfilm-Lesegerät 25 und eine zugehörige Tastatur 26 integriert, welche im Innern der Vorrichtung weggeschoben und damit staubgesichert werden können.

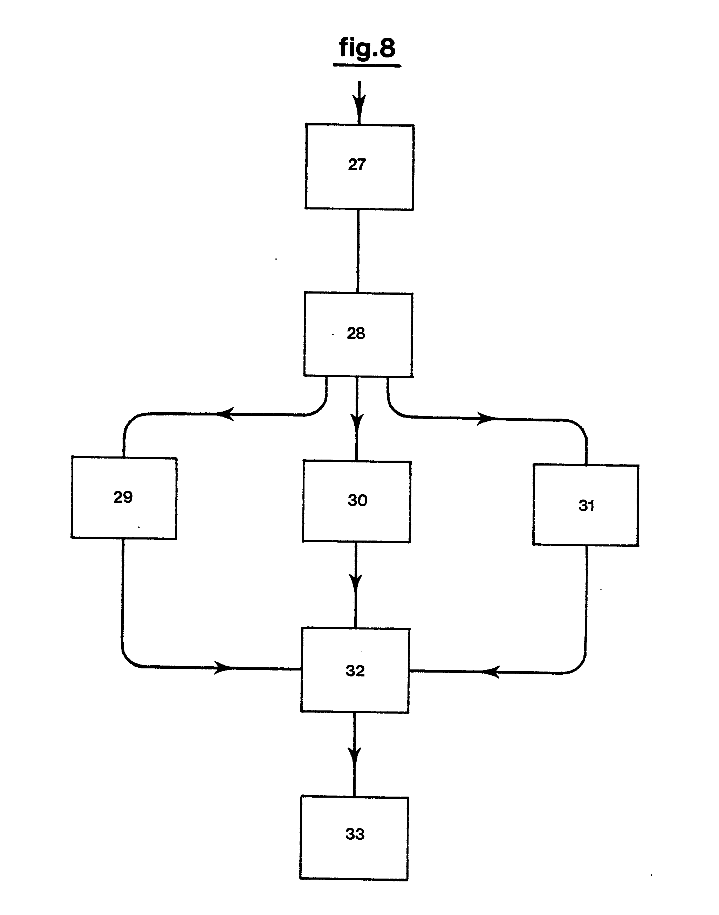

Die erfindungsgemässe Farbtonmischvorrichtung kann völlig für Handbetrieb oder gegebenenfalls völlig für automatischen Betrieb ausgeführt sein. Für automatischen Betrieb gilt das Blockschema in Fig. 8. Ein gespeichertes Farbtonmischrezept wird dabei in Magnetbandform, Lochkarte oder in anderer Form, dem mit Block 27 angedeuteten Interpretierungsgerät zugeführt und von dort an die mit Block 28 angedeuteten Steuereinheit der Maschine weitergeleitet. Von dieser Steuereinheit führt ein erstes Signal zu der mit Block 29 angedeuteten Lageretagensteuereinheit, ein zweites Signal führt zu der mit Block 30 angedeuteten Waagesteuereinheit und ein drittes Signal führt zu der mit Block 31 angedeuteten Rührwerksteuereinheit. Die Ausgangssignale der Steuereinheiten 29, 30 und 31 werden zu einer gemeinsamen, mit Block 32 angedeuteten, Kommandoeinheit für das Abfüllventil geführt. Das Ausgangssignal der Kommandoeinheit 32 dient zur Betätigung des zutreffenden, mit Block 33 angedeuteten, Abfüllventils. Danach wird in ähnlicher Weise nach Durchführung der gewünschten Schritte das nächste Abfüllventil betätigt usw. bis das zutreffende Farbtonmischrezept völlig ausgeführt ist.

Bei der gezeigten Farbtonmischvorrichtung können auf den zwölf Lageretagen 3 Lackqualitäten, d.h. Kunstharz, Acryl und Metallic, je zu Dosen à 3,75 Liter oder 1 liter drehbar untergebracht werden. Aus diesen Grundfarben können augenblicklich ca. 11400 verschiedene Mischungen hergestellt werden. In einer einfachen Ausführungsform könnte das Mischen gegebenenfalls noch von Hand erfolgen. Wie schon erwähnt, wird der Antrieb der Farbtonmischanlage über 3 Getriebemotoren vorgenommen:

Motor A:  für Rührwerk

Motor B:  für 12 Farbdosenträgerbänke oder Lageretagen

Motor C:  für den Tisch der zu bewegenden elektronischen Waage.

Nach Einschalten der Anlage mittels des Hauptschalters wird automatisch noch eine Sicherheitsschranke aktiviert und werden die verschiedenen Befehlsgeräte freigegeben.

Weiter ist die Ausführung derart, dass auf Knopfdruck jeden Morgen ein Programm ablaufen kann, bei dem die Farben, die auf den einzelnen Lageretagen untergebracht sind, während einer vorgewählten Zeit durchgerührt werden. Dies geschieht wie folgt: Knopf "Aufrührprogramm" drücken, Motor A schaltet sich ein, Motor B schaltet sich ein und die erste Lageretage läuft mit hoher Geschwindigkeit bis kurz vor das Rührwerk, berührungsloser Endschalter schaltet den Motor B auf niedrige Geschwindigkeit, erste Lageretage fährt in Rührposition. Nach Ablauf der über Zeitschaltuhr vorgegebenen Rührzeit fährt die erste Lageretage mit hoher Geschwindigkeit aus Rührposition heraus und die zweite Lageretage zum berührungslosen Endschalter, der den Motor B wieder auf niedrige Geschwindigkeit schaltet und die Lageretage mit dieser Geschwindigkeit ins Rührwerk fährt und abbremst. Danach Rühren nach vorgegebener Zeit, danach wieder Einschalten des Motors B auf hohe Geschwindigkeit und Ausfahren aus dem Rührwerk. Dieser vorgeschriebene Ablauf setzt sich fort, bis alle Dosen in den 12 Lageretagen aufgerührt sind. Nach Verlassen der Rührstation durch die letzte Lageretage, schalten Motor A und Motor B ab. Danach leuchtet ein Schild auf, "Freigabe zum Mischen", und kann der erste Mischvorgang erfolgen. Dies könnte z.B. mit dem erfindungsgemässen Farbtonmischvorrichtung wie folgt geschehen: Rezeptur auf dem Bildschirm des Mikrofilmlesegeräts suchen, Knopf "Mischen" drücken. Über Tastatur werden die Lageretage und die Stelle auf der Etage angewählt, auf der die erste Farbe steht. Der Bewegungsvorgang läuft wie folgt ab: Die angewählte Lageretage fährt mit hoher Geschwindigkeit bis kurz vor den Rührantrieb, über Endschalter Einschalten des Motors A und Umschalten des Motors B auf niedrige Geschwindigkeit. Über Endschalter hält die Lageretage in Rührstation, Motor wird gebremst, Zeituhr für Rührdauer läuft, welche Zeit je nach Farbe wählbar ist. Nach Erreichen der vorgeschriebenen Zeit fährt die Lageretage mit hoher Geschwindigkeit aus der Rührstation bis zum Endschalter vor der Abfüllstation. Hier wird der Motor B des Etagenantriebes wieder auf niedrige Geschwindigkeit umgepolt und fährt die Lageretage bis in die Abfüllstation. Hier wird der Motor durch einen Endschalter abgeschaltet und gebremst. Gleichzeitig mit dem Motor B wird der Motor C für den Waagetisch eingeschaltet, durch den die Waage in die vorgewählte Position gebracht wird. Der Tisch läuft mit hoher Geschwindigkeit bis zu einem Endschalter bis kurz vor der angewählten Stelle. Der Motor C wird über Endschalter auf niedrige Geschwindigkeit umgepolt und fährt die Waage in Abfüllposition. Hier wird über einen weiteren Endschalter der Motor abgeschaltet und gebremst.

Von Hand oder gegebenenfalls automatisch wird nun die entsprechende Farbmenge abgefüllt. Über Tastatur werden dann die Etage und die Stelle angewählt, auf der die zweite Farbe steht. Der vorbeschriebene Bewegungsvorgang läuft dann erneut ab, wenn sich die Farbe auf einer anderen Etage befindet. Steht sie jedoch auf der gleichen Etage wie die erste Farbe, so entfallen das Aufrühren und der Transport der Farbe durch den Lageretagenantrieb und nur der Waagenantrieb, d.h. Motor C, fährt, wie zuvor beschrieben, die Waage in die neue Abfüllposition, wo dann wieder die nächste Komponente zugewogen werden kann. Danach erfolgt Anwahl der Position für die dritte Farbe usw., bis alle Komponenten des Rezeptes zugewogen sind. Anschliessend kann der Farbbehälter aus der Anlage entnommen, verschlossen, gerüttelt und ausgegeben werden. Für die nächste Farbe, Knopf "Mischen" drücken und der zuvor beschriebene Ablauf kann erneut erfolgen.

Ein separates Lackrüttelgerät, das an sich bekannt und nicht in der Zeichnung dargestellt ist, kann in der Anlage integriert werden.

Die Ausführung der erfindungsgemässen Vorrichtung kann derart sein, dass ein Teil der Anlage auf Volumenmischsysteme umgerüstet werden kann.

Die erfindungsgemässe Farbtonmischvorrichtung ist bei automatisierter Ausführungsform vorzugsweise dadurch gekennzeichnet, dass die Vorderseite der Farbtonmischvorrichtung, d.h. die Seite der Vorrichtung, wo sich die Messvorrichtung, d.h. die Volumenmessvorrichtung oder die Waage, und die Abfüllposition der Lageretagen befinden, mit einer, zum Beispiel photoelektrisch oder in irgendeiner anderen Weise arbeitenden, Sicherheitsvorrichtung versehen ist. Die Ausführung der Sicherheitsvorrichtung ist dabei derart, dass während des Betriebs der Farbtonmischanlage die unterschiedlichen Bewegungen der ganzen Maschine unmittelbar über eine Schaltung eingestellt werden, sobald ein fremder Gegenstand, z.B. ein Teil des menschlichen Körpers, innerhalb einer, zum Beispiel photoelektrisch, abgegrenzten Zone an der Vorderseite der Farbtonmischvorrichtung ist. Eine photoelektrische Sicherheitsvorrichtung kann erfindungsgemäss in einfacher Weise an den senkrechten Seiten 34 und 35 (Fig. 2) der Bedienungsoeffnung an der Vorderseite der Anlage angeordnet sein.

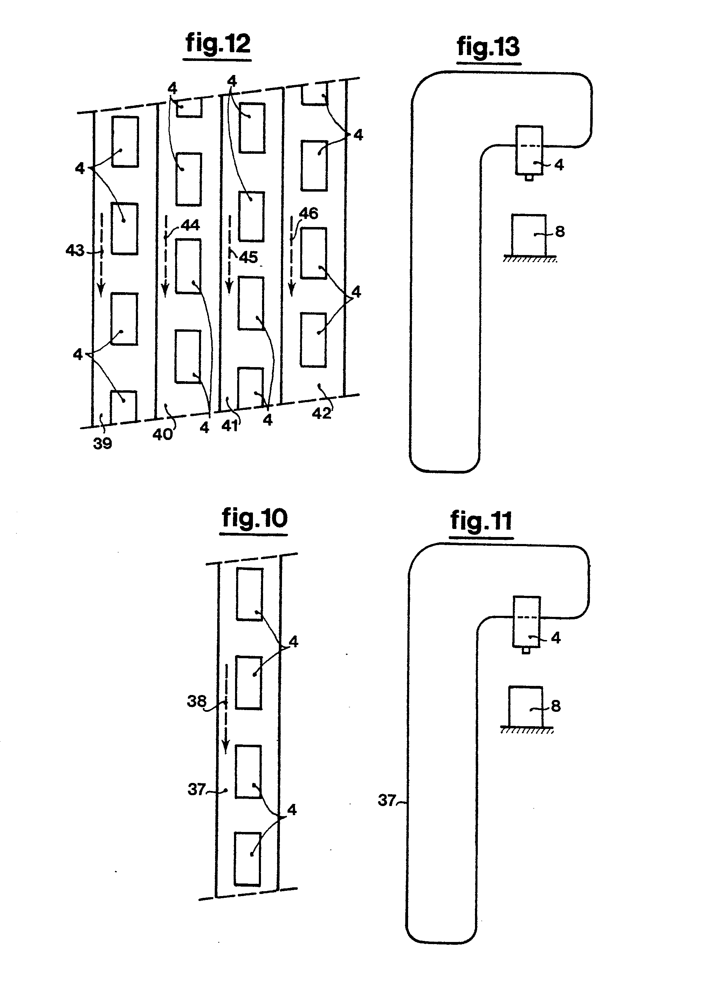

Bei der in Fig. 10 gezeigten sehr schematisch gezeichneten abgeänderten Ausführungsform der erfindungsgemässen Farbtonmischvorrichtung sind alle Lagerplätze für die Vorratsbehälter 4 auf einem einzigen endlosen Förderband 37 vorgesehen. An jedem Lagerplatz ist ein
Vorratsbehälter befestigt. Das Förderband 37 ist in der Richtung des
Pfeiles 38 bewegbar, so dass die Lagerplätze mit den darauf befindlichen Vorratsbehältern 4 in einer im wesentlichen vertikalen Ebene
bewegbar vorgesehen sind. Fig. 11 zeigt die Vorrichtung nach Fig. 10
in Seitenansicht, wobei einer der Vorratsbehälter 4 sich in der Abfüllposition oberhalb der Messvorrichtung mit einer Aufnahmeplattform
für den die Farbmischung aufnehmenden Behälter 8 befindet.

Bei der in Fig. 12 gezeigten abgeänderten Ausführungsform der erfindungsgemässen Farbtonmischvorrichtung sind die Lagerplätze für die
Vorratsbehälter 4 auf vier nebeneinander angebrachten endlosen
Förderbändern 39, 40, 41 und 42 vorgesehen. Diese Förderbänder sind
in der Richtung der Pfeile 43, 44, 45 und 46 bewegbar, so dass die
Lagerplätze mit den darauf befindlichen Vorratsbehältern 4 in vier
vertikalen Ebenen bewegbar vorgesehen sind. Fig. 13 zeigt die Vorrichtung nach Fig. 2 in Seitenansicht, wobei einer der Vorratsbehälter 4 sich in der Abfüllposition oberhalb der Messvorrichtung mit
einer Aufnahmeplattform für den die Farbmischung aufnehmenden Behälter
8 befindet.

Im Rahmen der vorliegenden Erfindung können unterschiedliche Abänderungen der beschriebenen und gezeichneten Farbtonmischvorrichtung
vorgenommen werden. Zum Beispiel könnten zwischen den am linken und
am rechten Ende der Anlage vorgesehenen Kettendrehsysteme noch
mehrere Kettendrehsysteme angeordnet werden. Weiter könnten statt
Ketten andere endlose Uebertragungsorgane benutzt werden. Gegebenenfalls ist es auch möglich, die Messvorrichtung, d.h. die Waage oder
die Volumenmessvorrichtung fest im Rahmen anzubringen. Der Inhalt der
Vorratsbehälter ist stark vom jeweiligen Anwendungsgebiet der erfindungsgemässen Mischvorrichtung abhängig und könnte zum Beispiel 1 bis
25 kg betragen, obwohl erheblich kleinere und auch grössere Mengen
möglich sind. Gegebenenfalls kann die Ausführung derart sein, dass
die Vorratsbehälter einzeln oder kollektiv gerührt werden.
Obwohl die erfindungsgemässe Vorrichtung in erster Instanz für die
Anwendung im Farbtonmischbereich konstruiert ist, ist es auch möglich,
die erfindungsgemässe Vorrichtung in anderen Bereichen, z.B. im pharmazeutischen Sektor, anzuwenden.

Patentansprüche

1. Mischvorrichtung, insbesondere Farbtonmischvorrichtung, mit mehreren in einem Rahmen vorgesehenen bewegbaren Lagerplätzen zur Aufnahme einer Anzahl unterschiedliche, insbesondere Basisfarbtöne, Sikkative, Härter oder andere Flüssigkeiten enthaltender und je mit einem Ventil versehener Vorratsbehälter, und mit einer Messvorrichtung und einem Aufnahmeplatz für den die Mischung, insbesondere eine Farbmischung, aufnehmenden Behälter, dadurch gekennzeichnet, dass die Lagerplätze in einer im wesentlichen vertikalen Ebene bewegbar vorgesehen sind.

2. Vorrichtung nach Anspruch 1, dadurch gekennzeichnet, dass die Lagerplätze in zwei oder mehreren vertikalen Ebenen bewegbar vorgesehen sind.

3. Vorrichtung nach Anspruch 1 oder 2, dadurch gekennzeichnet, dass die Messvorrichtung als Waage ausgebildet ist.

4. Vorrichtung nach Anspruch 1 oder 2, dadurch gekennzeichnet, dass die Messvorrichtung als Volumenmessvorrichtung ausgebildet ist.

5. Vorrichtung nach Anpsruch 1 oder 2, dadurch gekennzeichnet, dass zur Durchführung der Lagerplätzebewegung in vertikaler Ebene eines oder mehrere Kettendrehsysteme oder ähnliche Bewegungssysteme vorgesehen sind.

6. Vorrichtung nach Anspruch 1 mit mehreren parallelen als Lageretagen ausgebildeten Lagerplätzen, dadurch gekennzeichnet, dass die Lageretagen überwiegend länglich ausgeführt und quer zu deren Längsrichtung bezüglich des Rahmens bewegbar angeordnet sind.

7. Vorrichtung nach Anspruch 6, dadurch gekennzeichnet, dass zur Durchführung der Lageretagenbewegung quer zur Längsrichtung der Lageretagen mindestens zwei sich in Längsrichtung der Etagen in einer Entfernung befindlichen, mit den Etagen verbundenen Kettendrehsysteme oder ähnliche Bewegungssysteme vorgesehen sind.

8. Vorrichtung nach Anspruch 7, dadurch gekennzeichnet, dass am linken und am rechten Ende der länglichen Lageretagen ein Ketten- oder ähnliches Drehsytem zur Durchführung der Lageretagenbewegung quer zur Längsrichtung der Etagen und mit parallel bleibenden Etagen vorgesehen ist.

9. Vorrichtung nach Anspruch 1 oder 6, dadurch gekennzeichnet, dass das Bewegungssystem der Lagerplätze oder Lageretagen derart ausgeführt ist, dass jeder Lagerplatz in Abfüllposition gebracht werden kann.

10. Vorrichtung nach Anspruch 1 und 9, dadurch gekennzeichnet, dass die Messvorrichtung, d.h. die Volumenmessvorrichtung oder die Waage, über die gesamte Länge der in Abfüllposition befindlichen Lageretage verschiebbar im Rahmen angebracht ist.

11. Vorrichtung nach Anspruch 9, dadurch gekennzeichnet, dass das Bewegungssystem der Lageretagen derart ausgeführt ist, dass die Lageretagen in bezug auf die an der Vorderseite des Rahmens befindliche Abfüllposition aufwärts, vorwärts, abwärts und rückwärts bewegbar sind.

12. Vorrichtung nach Anspruch 6, dadurch gekennzeichnet, dass 5 bis 20, vorzugsweise 8 bis 15, parallele Lageretagen angebracht sind.

13. Vorrichtung nach Anspruch 8, dadurch gekennzeichnet, dass das Bewegungssystem der Etagen derart ausgeführt ist, dass die einzelnen Lageretagen nacheinander in eine Abfüllposition gefahren werden können.

14. Vorrichtung nach Anspruch 1 wobei die Vorratsbehälter mit einer Rührvorrichtung versehen sind, dadurch gekennzeichnet, dass das Bewegungssystem der Lageretagen derart ausgeführt ist, dass die einzelnen Lageretagen nach einander in eine Rührposition gebracht werden können.

- 13 -

0056170

15. Vorrichtung nach Anspruch 14, dadurch gekennzeichnet, dass das Bewegungssystem der Lageretagen derart mit mittels Schalter steuerbarem Antrieb ausgeführt ist, dass die Lageretagen mit hoher und mit niedriger Geschwindigheit bewogen werden können.

16. Vorrichtung nach Anspruch 15, dadurch gekennzeichnet, dass das Schaltsystem derart ausgeführt ist, dass die Etagen bis kurz vor Erreichung der Rührposition mit hoher Geschwindigkeit und mittels einer Zeitschaltung während des Rührvorgangs mit niedriger Geschwindigheit bewogen werden können.

17. Vorrichtung nach Anspruch 1-16, dadurch gekennzeichnet, dass zum Antrieb drei separate Motoren vorgesehen sind, wobei der erste Motor zum Antrieb des Rührwerks, der zweite Motor zum Antrieb der Lagerplätze oder Lageretagen und der dritte Motor zum Antrieb des Messvorrichtungschlittens vorgesehen ist.

18. Vorrichtung nach Anspruch 1, dadurch gekennzeichnet, dass die Auslaufventile der Farbtonbehälter stufenlos regelbar sind.

19. Vorrichtung nach Anspruch 1-6, dadurch gekennzeichnet, dass die Ausführung derart ist, dass die Drehbewegung des Kettensystems für die Lagerplätze oder Lageretagen und die Betätigung der Auslaufventile über eine Uebertragung, zum Beispiel ein Magnetband oder eine Speichertastatur, in Verbindung mit der Messvorrichtung als Signalgeber erfolgt.

20. Vorrichtung nach Anspruch 1, dadurch gekennzeichnet, dass mit dem Oeffnungsmechanismus des Auslaufventiles ein Füllstandsanzeiger gekoppelt ist, der, zum Beispiel akustisch, signalisiert, wann der benötigte Anteil des betreffenden Mischlackes nicht mehr ausreicht.

21. Vorrichtung nach Anspruch 1, dadurch gekennzeichnet, dass in der Anlage ein Microfilm-Lesegerät integriert ist.

0056170

22. Vorrichtung nach Anspruch 1, dadurch gekennzeichnet, dass in der Anlage ein Lackrüttelgerät integriert ist.

23. Vorrichtung nach Anspruch 1, dadurch gekennzeichnet, dass der Rahmen mit einer an mindestens drei, vorzugsweise fünf, der sechs Seiten geschlossenen Umhüllung versehen ist.

24. Vorrichtung nach Anspruch 1-6, dadurch gekennzeichnet, dass bei automatisierter Ausführungsform die Vorderseite, d.h. die Seite der Vorrichtung, wo sich die Messvorrichtung und die Abfüllposition der Lagerplätze oder Lageretagen befinden, mit einer, z.B. photoelektrisch oder in irgendeiner anderen Weise arbeiten-den, Sicherheitsvorrichtung versehen ist.

0056170

## fig.1

## fig.2

0056170

**fig.3**

0056170

## fig.4

0056170

**fig.5**

**fig.6**

**fig.7**

0056170

**fig.8**

## fig.9

0056170

**fig.12**

**fig.13**

**fig.10**

**fig.11**

| Europäisches Patentamt | **EUROPÄISCHER RECHERCHENBERICHT** | Nummer der Anmeldung |
|---|---|---|
| | | 0056170 |
| | | EP 81 20 0038.8 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE – A1 – 2 348 791 (BASF FARBEN + FASERN AG) <br> & FR – A1 – 2 245 496 <br> & US – A – 3 878 907 <br> -- | |
| A | DE – A1 – 2 951 731 (MISCELATORI DOSATORI ELETTRONICI MIDEL S.r.l.) <br> & FR – A1 – 2 445 167 <br> -- | |
| A | DE – B1 – 2 745 853 (BASF FARBEN + FASERN AG) <br> -- | |
| A | FR – A1 – 2 308 407 (G. ARRIGONI) <br> & DE – 2 617 637 <br> ---- | |

### KLASSIFIKATION DER ANMELDUNG (Int. Cl.³)

B 01 F 15/04
B 01 J 4/02
B 44 D 3/06

### RECHERCHIERTE SACHGEBIETE (Int. Cl.³)

B 01 F 15/00
B 01 J 4/00
B 44 D 3/00
G 05 D 11/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Berlin | 07-09-1981 | SCHULTZE |

EPA form 1503.1 06.78